# EUROPEAN PATENT APPLICATION

(11) **EP 0 995 511 A2**
(43) Date of publication of application: **26.04.2000**
(21) Application number: 99308249.4
(22) Date of filing: 19.10.1999
(51) Int. Cl.: B21D 22/00

(54) **Layered material and method for manufacturing same**

(30) Priority: 20.10.1998 US 175295
(71) Applicant: Alcoa Inc., Pittsburgh, PA 15212-5858 (US)
(72) Inventor: Benedyk, Joseph C., Lake Zurich, Illinois 60047 (US)
(74) Representative: Flynn, Michael Joseph

(57) **Abstract**

A layered material comprising a base layer of material, a second layer of material and an attachment material The base layer of material includes a first surface The second layer of material overlays at least a portion of the first surface of the base layer of material. The attachment material facilitates the attachment of the second layer of material to the base layer of material. In turn, the attachment material maintains the overlying positioning of the second layer relative to the first surface of the base layer of material upon combined deformation of at least a portion ofthe base layer and the second layer into a desired configuration.

## Description

### Background of the Invention

### Field of the Invention

The present invention is directed to layered materials, and more particularly to layered materials, such as metallic materials, which may be deformed to a desired configuration.

### Background Art

The ability to deform material, such as aluminium and steel, has long been known in the art. In particular, with certain deforming processes, such as stamping, certain regions of the formed stamping may be exposed to increased forces and stresses. Accordingly, such regions quite often require the use of yet additional material for providing structurally enhancement thereto.

One such conventional method for structurally enhancing these regions has been through the use of tailor welding techniques. In particular, the tailor welding method comprises the welding of thicker panel sections to an adjacently positioned outer perimeter of a thinner base panel. Subsequently, the adjacently joined panels are then subjected to a stamping process wherein the now unitary structure is deformed into a desired configuration. Such a tailor weld method has been utilized extensively in the steel stampings for automobile applications, to reduce part count, trim waste and lower assembly costs. Specifically, among others, these stampings have included automobile doors, hoods and trunks, having thicker regions proximate the hinge attachment regions due to the increased stresses which such regions are typically exposed to.

In addition to steel, tailor welding has been applied to other metals, including aluminium.

Conventional welding/joining techniques utilized in association with aluminium material when making tailor welded blanks include laser welding, GTAW, non-vacuum electron beam welding, friction stir welding and plasma assisted laser welding

While tailor welding blanks has satisfied various structural concerns, the process does have certain drawbacks. In particular, there are certain reliability concerns with tailor welding techniques. For example, tailor welded blanks that comprise a thick section joined to a thinner gauge sheet may result in reliability and formability complications. In addition, the tailor welding of thicker sections of a complex profile do not lend themselves to a reliable stamping. Furthermore, the formability of tailor welded blanks are limited by the ductility of the weld and the heat affected zones as well as the deformability thereof. Moreover, it is often quite difficult, if not impossible, to tailor weld one type of material to a different type of material - such as steel and aluminium, or even a plastic to a metal.

### Summary of the Invention

The present invention comprises a layered material which comprises a base layer of material, at least one second layer of material and means for attaching the base layer of material to the second layer of material. The base layer of material includes a first surface and the second layer of material overlays at least a portion of the first surface of the base layer of material. The attaching means maintains the overlaying positioning of the at least one second layer of material relative to the first surface of the base layer of material upon combined deformation of at least a portion of the base and second layers into a desired configuration.

In a preferred embodiment of the invention, the attaching means comprises an adhesive applied to at least a portion of at least one of the base layer of material and the at least one second layer of material. In such an embodiment, the adhesive may include any one of liquid and tape adhesives, pressure sensitive adhesives, two component reactive adhesives and melt bond adhesives.

In another preferred embodiment of the invention, the attaching means comprises at least one rivet associated with the base layer of material and the at least one second layer of material. It is contemplated that an adhesive can also be used in such an embodiment.

In yet another preferred embodiment of the invention, the base layer of material comprises a material thinner than the second layer of material.

In one preferred embodiment, the second layer of material includes a non-symmetrical geometric configuration. Additionally, the second layer of material may have a non-uniform cross-sectional configuration.

In still another preferred embodiment of the invention, the second layer of material comprises two discrete second layers of material positioned at predetermined positions relative to the base layer of material Although the base layer and the second layer of material may be of the same type of material, it is also contemplated that the base layer of material comprise a material different than the second layer of material. In such an embodiment, the base layer of material may be galvanically or anodizically incompatible with the second layer of material, and, the attaching means may include means for galvanically or anodizically shielding the base layer of material from the second layer of material.

The present invention further includes a method for manufacturing a material comprising the steps of: a) providing a base layer of material, b) overlaying at least one second layer of material over at least a portion of the base layer of material; c) attaching the second layer of material to the base layer of material, and d) deforming at least a portion of the combined second and base layers of material. It is also contemplated that more than two layers of material can be used in accordance with the present invention. The step of deforming maintains the attachment of the second layer of material to the base layer of material

In a preferred embodiment of the method, the step of attaching comprises the step of associating an adhesive to one or both of the base layer of material and the second layer of material.

In another preferred embodiment, the step of attaching may further comprise the step of riveting the base layer of material to the second layer of material, before or after the step of deforming.

In yet another preferred embodiment of the method, the step of deforming comprises the step of stamping, bending, drawing and/or punching.

In another preferred embodiment of the invention, the method may further include the step of applying a galvanic or anodized insulator to one or both of the base layer and the second layer of material so as to preclude physical contact between the two layers of material.

### Brief Description of the Drawings

Fig. 1 of the drawings is a perspective view of the layered apparatus of the present invention;
Fig. 2 of the drawings is a perspective view of the layered apparatus of Fig 1 after undergoing deformation;
Fig. 3 of the drawings is a cross-sectional view of the layered apparatus taken generally about lines 3-3 of Fig. 1;
Fig. 4 of the drawings is a perspective view of a second embodiment of the layered apparatus of the present invention;
Fig. 5 of the drawings is a perspective view of the second embodiment of Fig. 4 after undergoing deformation;
Fig. 6 of the drawings is a front elevational view of an alternate embodiment of the present invention;
Fig. 7 of the drawings is a top plan view of another alternate embodiment of the present invention; and
Fig. 8 of the drawings is a top plan view of yet another alternate embodiment of the present invention.

### Best Mode for Practising the Invention

While this invention is susceptible of embodiment in many different forms, there is shown herein in the drawings and will be described in detail several specific embodiments, with the understanding that the present disclosure is to be considered as an exemplification of the principles of the invention and is not intended to limit the invention to the embodiments illustrated.

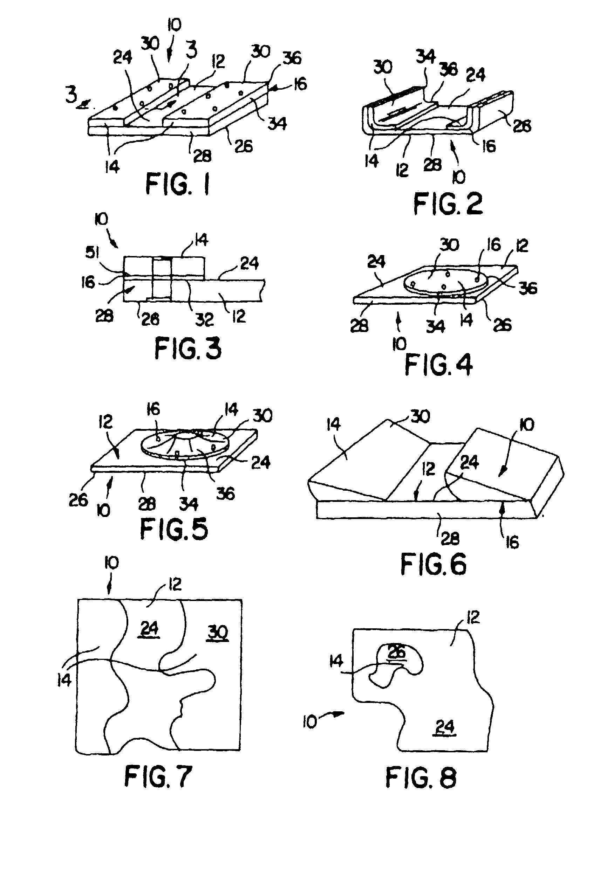

Layered material 10 is shown in Figs. 1-5 as comprising base layer of material 12, at least one second layer of material 14, and means 16 for attaching the second layer of material to the base layer of material. As will be explained, once attached, the base and second layers of material are maintained in the desired orientation upon combined deformation of these layers into a desired configuration.

Base layer of material 12 is shown in Figs 1,2 and 4,5 as including first surface 24, opposing surface 26, outer perimeter 27 and cross-section 28. Base layer of material 12 may be of any desired shape, and is not limited to the rectangular shapes shown. In addition, cross-section 28 may be uniform, or may vary as needed for a particular application. Base layer of material 12 may comprise any one of a variety of materials which are at least partially deformable, including various metals and metal alloys thereof, such as aluminium, steel and magnesium, as well as various plastics, composites and rubberized materials.

Second layers 14 are shown in Figs. 1-5 as each comprising top surface 30, bottom surface 32 (Fig. 3), cross-section 34 and perimeter 36. Bottom surface 32 overlies first surface 24 of base layer 12. Of course, it is likewise contemplated that bottom surface 32 may overlie opposing surface 26 of base layer 12 As shown in Figs. 1 and 2, multiple second layers 14 may be positioned on first surface 24 of base layer 12.

Each second layer of material 14 may comprise a material different or identical to that of the base layer of material. As will be explained with respect to the method, where the material used for the base layer is incompatible with the material used for the second layer of material, an additional means 51 for insulating (Fig. 3) may be utilized to insulate galvanically or by anodizing, and, in turn, physically preclude contact between the two layers of material. As will be explained, attachment means 16 maintains the overlying positioning of the two layers

As with the base layer of material, the overall dimensions (perimeter, length, width, shape cross-section, etc.) of second layer 14 may be varied. In particular, any of the dimensions may be non-uniform and non-symmetrical. The alternate embodiments illustrated in Figs. 6-8 each include base layers 12 and second layers 14 wherein the various dimensions of the base layer and/or the associated second layers may be substantially non-uniform and/or non-symmetrical For example, Fig. 6 discloses second layers which include a non-uniform cross-section. Fig. 7 discloses second layers having a non-symmetrical shape; and Fig. 8 discloses a base layer and a second layer each having a non-uniform shape. In sum, the shape of each of the base layer and the second layer is not confined to any particular configuration, and, in fact, the shapes are limitless.

Attaching means 16 is shown in Figs. 3 and 4 as comprising adhesive 38 and rivets, such as rivet 40. Adhesive 38 may be applied to one or both of the base layer of material and the second layer of material. Adhesive 38 may comprise a multitude of different adhesives, including liquid and tape adhesives, low shear adhesives, pressure sensitive adhesives, two component reactive adhesives and melt bond adhesives. While not limited to any particular adhesive, adhesives having shear/bond characteristics which allow flow in shear while maintaining adhesion and facilitating the obtaining of high adhesion strength after deforming, with or without application of heat, are quite desirable for use.

Rivets, 40 (or other conventional fasteners) are shown in Figs. 3 and 4 as being applied to various regions of the layered material. In particular, self piercing rivets or fasteners, such as AKH fasteners, as well as various welding, spot welding and/or brazing techniques, can be used to replace or supplement adhesive 38. Many of these types of fasteners are flush with both opposing surface 26 of base layer of material 12 and with top surface 30 of second layer of material 14, which is quite advantageous in many applications. In operation, to fabricate the layered material and to form the material to the desired final deformed configuration, it is first necessary to determine the minimum thicknesses/dimensions of the base layer of material. Once this is determined, it is necessary to determine the regions which will require reinforcement or additional thickness. Accordingly, from this information, the desired thickness and the desired dimensions of the second layers of material can be determined. These determinations can be made using various algorithms and analysis, including finite element analysis, among other techniques

After the appropriate determinations have been made, base layer of material 12 and second layer of material 14 are formed to the desired dimensions To form the base layer of material and/or the second layer of material, blanks of stock material may undergo various conventional formation techniques, including extrusion, punching, forging, rolling and casting, among others.

Once the base layer and the second layer of material are formed into the desired shape, the second layer of material is attached to the first layer of material by attachment means 16. In particular, adhesive 38 may be applied to one or both of the base layer and the second layer of material. The adhesive may be applied to the particular zones of attachment, or, adhesive may liberally be applied to each of the attachment surfaces. It is likewise contemplated that more than one type of adhesive may be utilized for the attachment of a single second layer of material 14 to base layer 12.

After the adhesive is applied, the second layer of material is attached to the base layer of material in the desired orientation. Wherein several discrete second layers of material are utilized, each one is attached to the base layer of material separately. As explained above, where the base layer of material and the second layer of material are incompatible (galvanically or otherwise) an additional insulating means 51 (Fig. 3) may be applied to preclude physical contact between the two incompatible materials. Alternatively, the adhesive itself can be formulated to galvanically isolate the second layer from the base layer. In place of the adhesive, or to supplement the adhesive, rivets as well as other fasteners or welding/brazing can be used to further insure that second layer of material 14 is fully secured to base layer of material 12.

Once the second layer of material is attached to the base layer of material as desired, as shown in Figs. 2 and 5, the combined layers are deformed into the desired shape/orientation. Various deformation processes are contemplated to deform the material into the desired final configuration, including but in no manner limited to stamping, bending, drawing and punching. For example, as shown in the embodiment of Fig. 2, the outer ends of the layered material are each bent at 90 degrees relative to the center section. In another example, as shown in the embodiment of Fig. 5, the middle section of the combined layered material 10 has been punched into a desired configuration

The layered material provides many advantages over conventional adjacently joined tailor welds. The welding of components along the entirety of the perimeter as is conventionally done with tailor welding produces weld and heat affected zones. As a result, even though the weld may survive a forming operation, the ductility and the toughness of the welded zone may be compromised in the end use of the component formed from the material. The above-identified material includes no such welding, and, in turn, creates no such welded zones with undesirable properties. In addition, the layered material is superior to conventional monolithic tailor welded materials in retarding crack propagation. Moreover, the layered material is readily formable inasmuch as the tensile strain which normally occurs in the forming of layers is reduced through the above-identified attachment structure and process.

Certain tests were performed to determine the viability and the applicability of the above-identified laminated material. In particular, several samples of 5182-0 aluminum alloy sheets having a thickness of 0.032" were formed and utilized as the base layer of material. In addition, several samples of 5052-0 aluminum alloy sheets having a thickness of 0.055" were formed and utilized as the second layer of material.

Once formed, pairs of these materials were overlayed relative to each other, and were attached through various adhesive means to render a specimen of laminated material for testing. In particular, various 3M VHB adhesive transfer tapes and double coated acrylic foam tapes (both pressure sensitive adhesive tapes), along with 3M Scotch-Weld epoxy adhesives (DP-460 and DP-420) were applied to one or both of the base layer and the second layer of material of each of the test specimens, and the respective layers were then adhesively secured to each other In addition, with certain of the test specimens, AKH self piercing/flush fasteners were used at various locations of the formed layered material to further insure attachment of the two layers.

Once the layers were attached to each other, the united blanks were deformed through various methods. In particular, certain specimens were bent in a brake press, resulting in a structure substantially similar to that shown in Fig. 2. Other specimens were drawn in an Erichsen test apparatus, resulting in a structure much like that shown in Fig. 5. While certain adhesives performed better than other adhesives throughout the deformation process, it was confirmed that the integrity of the adhesive bonds could be maintained depending upon the degree of deformation imparted, so that after the deformation process the base layer and the second layers of material maintained their attachment. In addition, it was visually and physically determined that the resulting overlaying regions had excellent strength properties.

The foregoing description and drawings merely explain and illustrate the invention and the invention is not limited thereto except insofar as the appended claims are so limited, as those skilled in the art who have the disclosure before them will be able to make modifications and variations therein without departing from the scope of the invention.

## Claims

1. A layered material comprising:
- a base layer of material having a first surface;
- at least one second layer of material overlying at least a portion of the first surface of the base layer of material; and
- means for attaching the at least one second layer of material to the base layer of material, to, in turn, maintain the overlaying positioning of the at least one second layer relative to the first surface of the base layer upon combined deformation of at least a portion of the base layer and the at least one second layer into a desired configuration.

2. The layered material according to claim 1 wherein the attaching means is selected from at least one of the group consisting of riveting, spot welding, welding or brazing of the base layer of material to the at least one second layer of material.

3. The layered material according to claim 1 or claim 2 wherein the attaching means comprises an adhesive applied to at least a portion of at least one of the base layer of material and the at least one second layer of material.

4. The layered material according to claim 3 wherein the adhesive is selected from the group consisting of liquid and tape adhesives, pressure sensitive adhesives, two component reactive adhesives and melt bond adhesives.

5. The layered material according to any one of the preceding claims wherein the base layer of material comprises a material thinner than the at least one second layer of material.

6. The layered material according to any one of the preceding claims wherein the at least one second layer of material includes a non-symmetrical geometric configuration.

7. The layered material according to any one of the preceding claims wherein the at least one second layer of material includes a non-uniform cross-sectional configuration.

8. The layered material according to any one of the preceding claims wherein the entirety of the at least one second layer of material overlays the base layer of material.

9. The layered material according to any one of the preceding claims wherein the at least one second layer of material comprises two discrete second layers of material positioned at predetermined positions relative to the base layer of material.

10. The layered material according to any one of the preceding claims wherein the base layer of material comprises a material different than the at least one second layer of material.

11. The layered material according to any one of the preceding claims wherein the base layer of material is galvanically incompatible with the at least one second layer of material.

12. The layered material according to any one of claims 3 to 11 wherein the attaching means includes means for shielding the base layer of material from the at least one second layer of material.

13. A method for manufacturing a material comprising the steps of:
- providing a base layer of material;
- overlaying at least one second layer of material over at least a portion of the base layer of material;
- attaching the at least one second layer of material to the base layer of material; and
- deforming at least a portion of the at least one overlaying second layer of material and, in turn, the underlying the base layer of material, wherein the step of deforming maintains the attachment of the second layer of material to the base layer of material.

14. The method according to claim 13 wherein the step of attaching comprises the step of associating an adhesive to at least a portion of at least one of the base layer of material and the at least one second layer of material.

15. The method according to claim 13 or claim 14 wherein the step of attaching comprises the step of riveting at least a portion of at least one of the base layer of material and the at least one second layer of material.

16. The method according to any one of claims 13 to 15 wherein the step of deformation is selected from the group consisting of stamping, bending, drawing, roll forming, stretching and punching.

17. The method according to any one of claims 13, 14 and 16 further including the step of applying an insulator to one of the base layer of material and the at least one second layer of material, to, in turn preclude physical contact between the two layers of material.

18. The method according to any one of claims 13 to 17 wherein the at least one second layer of material comprises a plurality of second layers of material.

19. The method according to any one of claims 13 to 18 wherein the step of attaching is selected from the group consisting of riveting, spot welding, welding or brazing of the base layer of material to the at least one second layer of material.
